(19) Europäisches Patentamt
European Patent Office
Office européen des brevets

(11) **EP 3 018 779 A1**

(12) **EUROPÄISCHE PATENTANMELDUNG**

(43) Veröffentlichungstag:
**11.05.2016 Patentblatt 2016/19**

(51) Int Cl.:
***H02G 1/12*** *(2006.01)*

(21) Anmeldenummer: **15188319.6**

(22) Anmeldetag: **05.10.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA**

(30) Priorität: **10.11.2014 DE 102014116344**

(71) Anmelder: **Lisa Dräxlmaier GmbH
84137 Vilsbiburg (DE)**

(72) Erfinder:
• **Maier, Christian
84155 Bodenkirchen (DE)**
• **Herzig, Jürgen
84155 Bodenkirchen (DE)**

(54) **VERFAHREN UND VORRICHTUNG ZUM ÜBERWACHEN UND/ODER STEUERN EINER ABISOLIEREINRICHTUNG FÜR EIN KABEL**

(57) Die vorliegende Erfindung betrifft ein Verfahren und eine Vorrichtung zum Überwachen und/oder Steuern einer Abisoliereinrichtung (5) für ein Kabel (1). Ein abzuisolierendes Kabel (1) weist dabei mindestens eine Litze (2) und eine Isolation (3) auf. Ein Messer (4) der Abisoliereinrichtung (5) schneidet in das Kabel (1) ein und zieht einen Teil der Isolation (3) von der mindestens einen Litze (2) ab. Dabei wird gemäß dem Verfahren Schall gemessen (S1). Der Schall wird analysiert (S2-S4), um einen Ist-Datensatz zu ermitteln. Der Ist-Datensatz wird mit mindestens einem Soll-Datensatz verglichen (S5-S13), um mindestens ein Vergleichsergebnis zu ermitteln. Basierend auf dem mindestens einen Vergleichsergebnis wird entschieden (S14-S16), ob ein gewünschtes oder nicht gewünschtes Abisolierergebnis vorliegt.

Fig. 4

## Beschreibung

### Technisches Gebiet

Die vorliegende Erfindung betrifft ein Verfahren sowie eine Vorrichtung zum Überwachen und/oder Steuern einer Abisoliereinrichtung für ein Kabel, wobei das abzuisolierende Kabel mindestens eine Litze aus Metall und eine Isolation aus Kunststoff aufweist.

### Stand der Technik

Für die Herstellung von Kabelbäumen für Kraftfahrzeuge werden sogenannte Konfektionierungs- und Bestückungsautomaten verwendet. Diese umfassen eine Abisoliereinrichtung, die zu verarbeitende Kabel abisoliert, indem sie mit mindestens einem Messer in das Kabel einschneidet und so die Isolation zumindest teilweise durchtrennt. Anschließend wird ein Teil der Isolation von der mindestens einen Litze durch relatives Bewegen des mindestens einen Messers zum Kabel abgezogen.

Beim Abisolieren kann es zu einer Beschädigung der Litzen kommen. Beispielsweise ist es denkbar, dass einzelne Litzen abgetrennt oder zumindest deformiert werden. Darüber hinaus ist es möglich, dass Litzen an den Messern hängen bleiben und dadurch herausgezogen werden, so dass sie anschließend aus dem Litzenbündel hervorstehen. Da man solche Beschädigungen vermeiden oder zumindest frühzeitig erkennen möchte, gibt es Ansätze zur Überwachung bzw. Steuerung von

Abisoliereinrichtungen.

Ein Ansatz ist beispielsweise aus der EP 2 722 949 A1 vorbekannt. Gemäß dieser Druckschrift wird während des Abisolierens eines Elektrokabels in einer Abisoliervorrichtung eine Berührung eines Leiters durch ein elektrisch leitfähiges Messer mit einer Sensorschaltung detektiert. Durch die Verbindung der Sensorschaltung mit dem Messer bildet sich eine Messkapazität aus. Wenn eine Änderung dieser Messkapazität größer ist als ein festgelegter Schwellwert, wird ein Signal ausgegeben, das eine Berührung des Leiters anzeigt. Dieser Ansatz erfordert eine aufwändige elektronische Schaltung und arbeitet nicht immer zufriedenstellend.

Vor diesem Hintergrund ist es eine Aufgabe der vorliegenden Erfindung, ein alternatives Verfahren und eine alternative Vorrichtung zum Überwachen und/oder Steuern einer Abisoliereinrichtung für ein Kabel bereit zu stellen.

### Beschreibung der Erfindung

Erfindungsgemäß wird diese Aufgabe durch die Gegenstände der unabhängigen Patentansprüche gelöst. Ausführungsformen der Erfindung ergeben sich aus den abhängigen Patentansprüchen, der nachfolgenden Beschreibung und den Figuren. Dementsprechend umfasst die Erfindung ein Verfahren zum Überwachen und/oder Steuern einer Abisoliereinrichtung für ein Kabel, die ein abzuisolierendes Kabel mit mindestens einer Litze aus Metall und einer Isolation aus Kunststoff abisoliert, indem sie mit mindestens einem Messer in das Kabel einschneidet, um die Isolation zumindest teilweise zu durchtrennen. Nach dem Einschneidevorgang wird ein Teil der Isolation von der mindestens einen Litze durch relatives Bewegen des mindestens einen Messers zum Kabel abgezogen.

Gemäß dem hier vorgeschlagenen Verfahren wird ein Schall gemessen, der während des Einschneidens und/oder Abziehens entsteht. Bei dem Schall kann es sich beispielsweise um Körperschall handeln, der sich in einem festen Medium wie z.B. dem Messer ausbreitet, oder auch um einen Luftschall, wie er in einem bestimmten Frequenzbereich beispielsweise durch das menschliche Ohr wahrgenommen werden kann. Natürlich können auch Messungen von Körperschall und von Luftschall kombiniert werden, um auf diese Weise zu noch besseren Ergebnissen zu gelangen.

Erfindungsgemäß wird der Schall analysiert, um einen Ist-Datensatz zu ermitteln. Beim Ist-Datensatz kann es sich beispielsweise um ein gemessenes Frequenzspektrum handeln. Der Ist-Datensatz wird mit mindestens einem Soll-Datensatz verglichen, um mindestens ein Vergleichsergebnis zu bestimmen. Bei diesem mindestens einen Soll-Datensatz kann es sich beispielsweise um mindestens ein Vergleichsfrequenzspektrum handeln. Basierend auf dem mindestens einen Vergleichsergebnis wird entschieden, ob ein gewünschtes oder nicht gewünschtes Abisolierergebnis vorliegt.

Eine Grundidee der vorliegenden Erfindung besteht darin, dass andere Vibrationen entstehen, wenn ein Abisoliermesser die Kunststoffisolation durchschneidet als wenn das Abisoliermesser auf eine Litze aus Metall trifft. Das hier vorgeschlagene Verfahren nutzt diesen Umstand aus, um zwischen gewünschten und nicht gewünschten Abisolierergebnissen zu unterscheiden.

Gemäß einer Ausführungsform des Verfahrens umfasst der Schritt des Analysierens des Schalls eine Analog-Digital-Wandlung. Das digitalisierte Signal kann anschließend mit Hilfe einer schnellen Fourier-Transformation aus der Zeitdomäne in die Frequenzdomäne übertragen werden, um so ein gemessenes Frequenzspektrum zu ermitteln. Auch eine Filterung des Signals kann im Rahmen der Analyse des Schalls vorgesehen sein. Insbesondere können Frequenzbereiche herausgefiltert werden, die in der Regel einen hohen Rauschanteil aufweisen, weil sich in diesen Frequenzbereichen z.B. Vibrationen äußern, die nicht vom Abisoliervorgang herrühren, sondern vielmehr durch andere Einflüsse, wie z.B. Elektromotoren am Konfektionierungsautomaten, verursacht werden.

Vorzugsweise entspricht natürlich jeder Soll-Datensatz einem gewünschten Abisolierergebnis. Es kann nur ein einziger Soll-Datensatz verwendet werden oder auch mehrere Soll-Datensätze. Mehrere Soll-Datensätze bieten sich insbesondere dann an, wenn zu einem gewünschten Abisolierergebnis über unterschiedliche Ereignisketten gelangt werden kann. Beispielsweise können die Messer beim Einschneiden sehr dicht an die Litzen vordringen, ohne diese zu berühren. Ein Abziehen eines Teils der Isolation von den Litzen wird dann relativ wenige Vibrationen erzeugen. Wird hingegen weniger tief eingeschnitten, so entstehen möglicherweise durch den Abreißvorgang der Isolation beim Abziehen charakteristische Vibrationen. Dennoch wird das Abisolierergebnis möglicherweise akzeptabel sein. Es ist also denkbar, dass sich gewünschte Abisolierergebnisse durchaus hinsichtlich der durch die Abisolation erzeugten Vibrationen unterscheiden.

Die Gewinnung eines Soll-Datensatzes kann beispielsweise dadurch erfolgen, dass Schall während des Einschneidens und/oder Abziehens gemessen wird. Anschließend wird dieser Schall analysiert, um einen Datensatz zu ermitteln. Dann wird das gerade erzeugte Abisolierergebnis beurteilt. Dies kann beispielsweise durch eine Bedienperson der Abisoliereinrichtung erfolgen, indem die Bedienperson das abisolierte Kabel genau betrachtet. Über eine Eingabeschnittstelle der Abisoliereinrichtung kann der gerade erzeugte Datensatz klassifiziert werden. Wenn das Abisolierergebnis einem gewünschten Abisolierergebnis entspricht, kann der gerade ermittelte Datensatz als Soll-Datensatz abgespeichert werden. Die Abisoliereinrichtung wird also angelernt. Interessante Ergebnisse können sich gerade auch durch einen Vergleich von Datensätzen ergeben, die auf gewünschte Abisolierergebnisse hindeuten, mit Datensätzen, die bei nicht gewünschten Abisolierergebnissen entstanden sind.

Gemäß einer Ausführungsform kann das Vergleichen des Ist-Datensatzes mit einem Soll-Datensatz dadurch geschehen, dass jeweils eine Zeitscheibenabweichung zwischen einer Zeitscheibe des Ist-Datensatzes und einer dazugehörigen Zeitscheibe des Soll-Datensatzes zu mehreren vorgegebenen Zeitpunkten ermittelt wird. Die ermittelten Zeitscheibenabweichungen werden dann in irgendeiner Form aggregiert, um eine Gesamtabweichung zu ermitteln. Beispielsweise ist es möglich, die Beträge der Zeitscheibenabweichungen aufzusummieren. Wie bereits weiter oben deutlich wurde, beziehen sich die Ist-Datensätze und die Soll-Datensätze nicht auf einen einzigen Zeitpunkt. Vielmehr wird in der Regel eine Zeitperiode betrachtet, die mit dem Zusammenfahren der Messer beginnt und mit dem vollständigen Abziehen des abgeschnittenen Isolationsteils endet. Vorzugsweise wird natürlich der zeitliche Beginn des Ist-Datensatzes mit dem zeitlichen Beginn des Soll-Datensatzes synchronisiert. Beispielsweise kann als Anfangspunkt jeweils der Punkt hergenommen werden, zu dem die Messer zum ersten Mal in Bewegung gesetzt wurden. Hinsichtlich der Zerlegung der Datensätze in Zeitscheiben sind unterschiedliche Granularitäten denkbar. Beispielsweise könnte alle 10 Millisekunden eine Zeitscheibe betrachtet werden.

Wie bereits weiter oben ausgeführt wurde, kann der Ist-Datensatz insbesondere einem gemessenen Frequenzspektrum und der Soll-Datensatz einem Vergleichsfrequenzspektrum entsprechen. Eine Zeitscheibenabweichung zu einem vorgegebenen Zeitpunkt kann dann dadurch ermittelt werden, dass jeweils eine Abweichung zwischen einem Pegel der Zeitscheibe des gemessenen Frequenzspektrums zum vorgegebenen Zeitpunkt und einem Pegel der Zeitscheibe des Vergleichsfrequenzspektrums zum vorgegebenen Zeitpunkt für mehrere vorgegebene Frequenzen ermittelt wird. Die ermittelten Abweichungen können dann wiederum aggregiert werden, um eine Zeitscheibenabweichung zum vorgegebenen Zeitpunkt bereit zu stellen. Die Aggregation kann wiederum beispielsweise durch ein Aufsummieren der Beträge der Abweichungen erfolgen.

Basierend auf der Gesamtabweichung kann dann entschieden werden, ob ein gewünschtes oder nicht gewünschtes Abisolierergebnis vorliegt. Gemäß einer Ausführungsform der vorliegenden Erfindung wird entschieden, dass der Ist-Datensatz einem gewünschten Abisolierergebnis entspricht, wenn die Gesamtabweichung einen vorgegebenen Grenzwert unterschreitet. Wenn die Gesamtabweichung hingegen einen vorgegebenen Grenzwert überschreitet oder dem Grenzwert genau entspricht, wird entschieden, dass der Ist-Datensatz einem nicht gewünschten Abisolierergebnis entspricht. Als Reaktion hierauf kann beispielsweise ein Warnsignal ausgegeben werden.

Vorzugsweise wird die Entscheidung dazu verwendet, die Abisoliereinrichtung zu steuern, um eine Einschneidtiefe des mindestens einen Messers in das Kabel anzupassen. Die Steuerung der Abisoliereinrichtung erfolgt also dann in Abhängigkeit von dem mindestens einen Vergleichsergebnis. Wenn das Messen des Schalls, seine Analyse sowie das Vergleichen und Entscheiden ausreichend schnell erfolgt, kann noch während eines überwachten Abisoliervorgangs die Einschneidtiefe des mindestens einen Messers angepasst werden. Häufig wird die Verarbeitungsgeschwindigkeit hierfür jedoch nicht ausreichen, so dass die Einschneidtiefe nur für Abisoliervorgänge angepasst werden kann, die auf den überwachten Abisoliervorgang folgen. Bevorzugt wäre es natürlich, nicht gewünschte Abisolierergebnisse und damit Ausschuss durch eine besonders schnelle Verarbeitung der Messergebnisse komplett zu verhindern.

Gemäß einem weiteren Aspekt umfasst die Erfindung eine Vorrichtung zum Überwachen und/oder Steuern einer Abisoliereinrichtung für ein Kabel, das mindestens eine Litze aus Metall und eine Isolation aus Kunststoff aufweist. Die Abisoliereinrichtung besitzt mindestens ein Messer, um in das Kabel einzuschneiden und die Isolation zumindest teilweise zu durchtrennen. Weiterhin ist die Abisoliereinrichtung dafür eingerichtet, nach dem Einschneiden einen Teil der Isolation von der mindestens einen Litze durch relatives Bewegen des mindestens einen Messers zum Kabel abzuziehen. Erfindungsgemäß umfasst die Vorrichtung eine Sensorik zum Messen von Schall, der während des Einschneidens und/oder Abziehens entsteht. Darüber hinaus besitzt die Vorrichtung eine Verarbeitungseinheit, die dafür eingerichtet ist, den gemessenen Schall zu analysieren, um einen Ist-Datensatz zu ermitteln, den Ist-Datensatz mit mindestens einem Soll-Datensatz zu vergleichen, um mindestens ein Vergleichsergebnis zu ermitteln, und basierend auf dem mindestens einen Vergleichsergebnis zu entscheiden, ob ein gewünschtes oder nicht gewünschtes Abisolierergebnis vorliegt.

Vorzugsweise ist die genannte Vorrichtung natürlich Bestandteil einer Abisoliereinrichtung. Sie kann abgesehen von der Sensorik aber auch außerhalb der Abisoliereinrichtung vorgesehen sein.

In einer Ausführungsform umfasst die Sensorik ein Mikrofon. Dieses kann beispielsweise in einem Bereich der Abisoliereinrichtung angeordnet sein, in dem das mindestens eine Messer in das Kabel einschneidet.

Zusätzlich oder alternativ kann die Sensorik einen Körperschallsensor umfassen. Dieser ist vorzugsweise in einem Bereich der Abisoliereinrichtung angeordnet, in dem sich das mindestens eine Messer befindet. Beispielsweise kann der Körperschallsensor direkt auf dem Messer angeordnet sein.

Die genannte Verarbeitungseinheit kann zusätzlich dafür eingerichtet sein, eine Analog-Digital-Wandlung durchzuführen. In einer Ausführungsform transformiert sie die so entstandenen digitalen Daten mit Hilfe einer schnellen Fourier-Transformation, um so ein gemessenes Frequenzspektrum zu ermitteln. Auch eine Filterung kann mit Hilfe der Verarbeitungseinheit durchgeführt werden.

Vorzugsweise umfasst die Vorrichtung eine Speichereinheit zum Speichern mindestens eines Soll-Datensatzes, der einem gewünschten Abisolierergebnis entspricht.

Darüber hinaus kann die erfindungsgemäße Vorrichtung eine Steuereinrichtung zum Steuern der Abisoliereinrichtung in Abhängigkeit von dem mindestens einen Vergleichsergebnis umfassen, um so eine Einschneidtiefe des mindestens einen Messers in das Kabel anzupassen.

Zusätzlich umfasst die Erfindung gemäß noch einem weiteren Aspekt eine Abisoliereinrichtung für ein Kabel mit mindestens einer erfindungsgemäßen Vorrichtung.

Die Erfindung wurde mit Bezug auf ein Verfahren und eine Vorrichtung erläutert. Sofern nichts anderes angegeben ist, sind die mit Bezug auf das Verfahren ausgeführten Merkmale natürlich analog auf die Vorrichtung anwendbar und umgekehrt. Das kann insbesondere bedeuten, dass Ausführungsformen der Vorrichtung die entsprechenden Mittel umfassen, um die beschriebenen Schritte auszuführen.

## Kurze Figurenbeschreibung

Weitere Details von Ausführungsformen der Erfindung sowie damit zusammenhängende Vorteile werden im Folgenden mit Bezug auf die Figuren erläutert. Dabei zeigen:

Figur 1          ein korrekt abisoliertes Kabel;

Figur 2          zwei Messer, die in die Isolation eines Kabels einschneiden;

Figur 3A-3C      verschiedene fehlerhaft abisolierte Kabel;

Figur 4          eine Abisoliereinrichtung mit einer ersten Ausführungsform einer erfindungsgemäßen Vorrichtung;

Figur 5          eine Abisoliereinrichtung mit einer zweiten Ausführungsform einer erfindungsgemäßen Vorrichtung;

Figur 6          eine Ausführungsform eines erfindungsgemäßen Verfahrens;

Figur 7A         ein Beispiel für ein Messergebnis im Zeitbereich;

Figur 7B         ein Beispiel für ein gemessenes Frequenzspektrum und

Figur 7C         ein Beispiel für den Vergleich einer Zeitscheibe des gemessenen Frequenzspektrums mit einer Zeitscheibe des Vergleichsfrequenzspektrums.

In der nachfolgenden Beschreibung werden gleiche und gleich wirkende Elemente, sofern nichts anderes angegeben ist, mit denselben Bezugszeichen benannt.

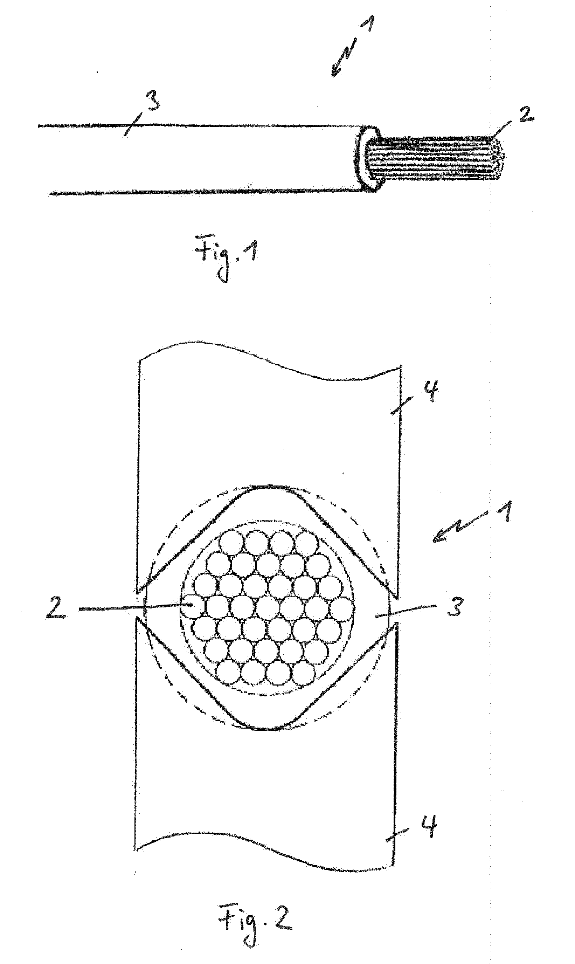

In der Figur 1 ist ein korrekt abisoliertes Kabel 1 mit mehreren Litzen 2 aus Metall und einer Isolation 3 aus Kunststoff dargestellt.

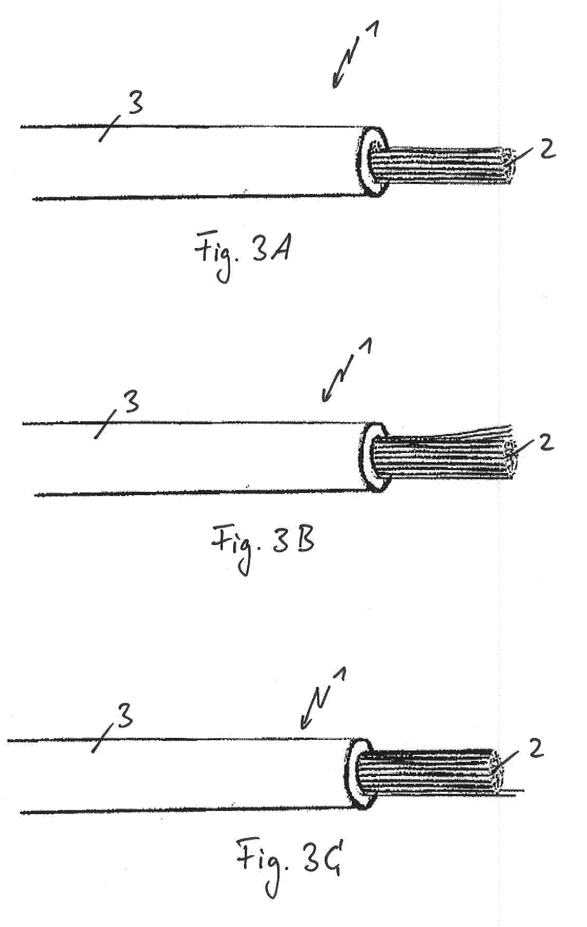

Die Abisolation erfolgte mit Hilfe von mehreren Messern 4, die wie in Figur 2 dargestellt in das Kabel 1 einschneiden, um die Isolation zumindest teilweise zu durchtrennen. Dabei kann es jedoch zu einer Beschädigung der Litzen 2 kommen. In den Figuren 3A-3C sind drei typische Fehlerfälle dargestellt. In der Figur 3A ist ein Kabel 1 gezeigt, bei dem einige Litzen 2 abgetrennt und der abgetrennte Teil beim Abziehen entfernt wurde. Die Figur 3B illustriert einen Fehlerfall, bei dem das Messer an einer Seite in die Litzen eingeschnitten hat, so dass einige Litzen 2 deformiert sind. In der Figur 3C ist ein Fall dargestellt, bei dem eines der Messer an einer Seite in die Litzen eingeschnitten hat und diese beim Abziehen teilweise mit hinausgezogen wurden, so dass einige Litzen über die anderen Litzen hinaus stehen.

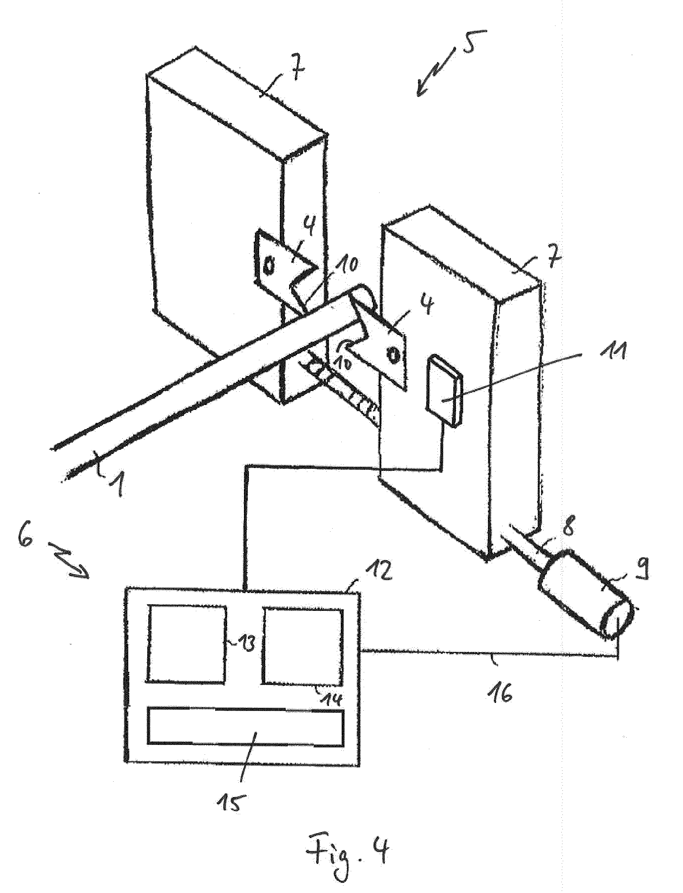

In der Figur 4 ist eine Abisoliereinrichtung 5 mit einer ersten Ausführungsform einer erfindungsgemäßen Vorrichtung 6 dargestellt. Die Abisoliereinrichtung 5 umfasst zwei Messerblöcke 7, die über eine Spindel 8 von einem Elektromotor 9 angetrieben werden. Jeder Messerblock 7 trägt ein Messer 4 mit einer im Wesentlichen V-förmigen Schneidkante 10. Wenn die Messerblöcke 7 mit Hilfe des Elektromotors 9 zusammengefahren werden, schneiden die Messer 4 in die Isolation des Kabels 1 ein, so dass das Kabel 1 abisoliert werden kann.

Um den Abisoliervorgang zu überwachen und die Abisoliereinrichtung 5 gegebenenfalls zu steuern, ist auf einem der Messerblöcke 7 ein Körperschallsensor 11 angeordnet. Dieser Körperschallsensor 11 ist mit einem Computer 12 verbunden, der eine Verarbeitungseinheit 13, eine Steuereinrichtung 14 sowie eine Speichereinheit 15 aufweist. Die Verarbeitungseinheit 13 empfängt Signale von dem Körperschallsensor 11, analysiert diese Signale, um einen Ist-Datensatz zu ermitteln, und vergleicht anschließend den so ermittelten Ist-Datensatz mit einem in der Speichereinheit 15 gespeicherten Soll-Datensatz. Basierend auf einem Vergleichsergebnis dieses Vergleichs kann entschieden werden, ob ein gewünschtes oder nicht gewünschtes Abisolierergebnis vorliegt. Für ihre Analyse ist die Verarbeitungseinheit 13 fähig eine Analog-Digital-Wandlung, eine schnelle Fourier-Transformation sowie eine Filterung durchzuführen. Die Steuereinrichtung 14 steuert über die Verbindung 16 den Elektromotor 9 derart in Abhängigkeit des Vergleichsergebnisses, dass die beiden Messer 4 möglichst die Litzen im Kabel 1 nicht beschädigen.

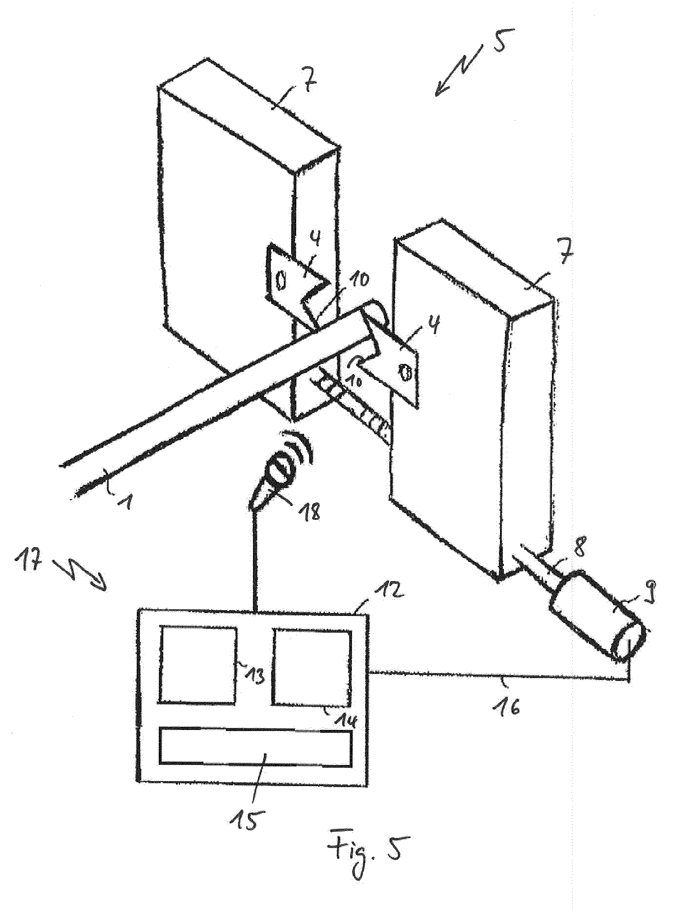

Die Figur 5 zeigt eine Abisoliereinrichtung 5 mit einer zweiten Ausführungsform einer erfindungsgemäßen Vorrichtung 17. Diese Vorrichtung 17 unterscheidet sich von der ersten Ausführungsform dieser Vorrichtung 6 in der Ausgestaltung ihrer Sensorik. Statt eines Körperschallsensors 11 ist in der zweiten Ausführungsform der Vorrichtung 17 ein Mikrofon 18 vorgesehen. Natürlich ist auch eine Ausführungsform denkbar, die sowohl mit einem Körperschallsensor 11 als auch mit einem Mikrofon 18 arbeitet.

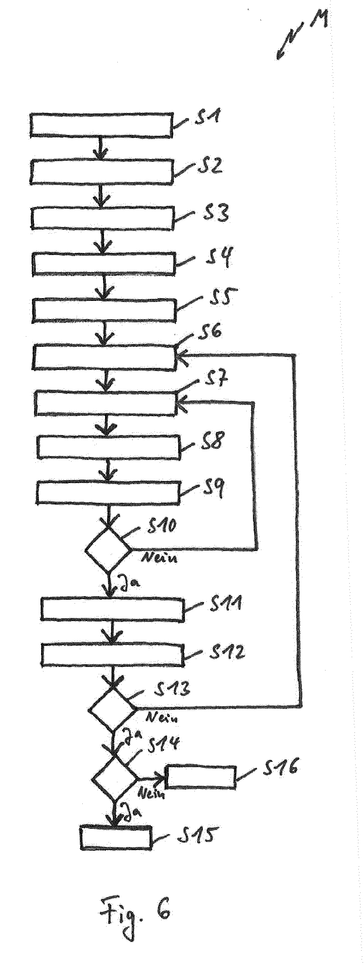

Die Figur 6 zeigt eine Ausführungsform eines erfindungsgemäßen Verfahrens M zum Überwachen und/oder Steuern einer Abisoliereinrichtung für ein Kabel. In Schritt S1 wird zunächst Schall gemessen, der während des Einschneidens und/oder Abziehens entsteht. Das Messergebnis wird in Schritt S2 einer Analog-Digital-Wandlung unterzogen und anschließend mit Hilfe einer schnellen Fourier-Transformation in den Frequenzbereich überführt (Schritt S3). Das Ergebnis wird dann in Schritt S4 gefiltert. Auf diese Weise wird ein Ist-Datensatz bereitgestellt. Dieser soll in den folgenden Schritten mit einem Soll-Datensatz verglichen werden. Hierfür erfolgt in Schritt S5 eine Initialisierung. Dabei wird der Zeitpunkt t auf einen Anfangswert gesetzt, um mit der ersten Zeitscheibe anzufangen. Die Gesamtabweichung wird mit null initialisiert.

In Schritt S6 wird die auf diese Weise ausgewählte Zeitscheibe initialisiert, indem die vorgegebene Frequenz f auf einen Anfangswert gesetzt wird. Die Zeitscheibenabweichung zum Zeitpunkt t wird auf null gesetzt. In Schritt S7 wird dann eine Abweichung zwischen dem Pegel der Zeitscheibe des gemessenen Frequenzspektrums zum vorgegebenen Zeitpunkt t und dem Pegel der Zeitscheibe des Vergleichsfrequenzspektrums zum vorgegebenen Zeitpunkt t ermittelt, wobei jeweils der Pegel an der Frequenz f betrachtet wird. Anders ausgedrückt wird folgende Berechnung durchgeführt:

$$\text{Abweichung}_{tf} := |P_{Ist}(t,f) - P_{Soll}(t,f)|$$

Hierbei bedeutet Abweichung$_{tf}$ die Abweichung zu einem vorgegebenen Zeitpunkt t bei einer vorgegebenen Frequenz f. $P_{Ist}(t,f)$ entspricht dem Pegel des Ist-Datensatzes am Zeitpunkt t an der Frequenz f. $P_{Soll}(t,f)$ bezeichnet den Pegel des Soll-Datensatzes zum Zeitpunkt t an der Frequenz f.

In Schritt S8 wird der Variablen Zeitscheibenabweichung$_t$ die bisherige Zeitscheibenabweichung$_t$ zuzüglich der ermittelten Abweichung$_{tf}$ an der gerade betrachteten Frequenz zugeordnet. Anders ausgedrückt gilt:

$$\text{Zeitscheibenabweichung}_t :=$$

$$\text{Zeitscheibenabweichung}_t + \text{Abweichung}_{tf}$$

In Schritt S9 wird dann die Frequenz f um einen vorgegebenen Frequenzabstand erhöht. In Schritt S10 wird entschieden, ob die Frequenz f damit bereits den Endwert erreicht hat. Sollte dies nicht der Fall sein, wird zu Schritt S7 zurückgekehrt. Wenn der Endwert hingegen erreicht ist, wird zu Schritt S11 verzweigt.

In diesem Schritt S11 wird der Variablen Gesamtabweichung die Gesamtabweichung zuzüglich der Zeitscheibenabweichung$_t$ zugewiesen. In Schritt S12 wird die zu betrachtende Zeit t dann um einen vorgegebenen Zeitabstand erhöht. In Schritt S13 wird entschieden, ob t bereits den Endwert erreicht hat. Sollte dies nicht der Fall sein, so wird zu Schritt S6 zurückgekehrt. Wenn der Endwert der Zeit t bereits erreicht ist, wird zu Schritt S14 verzweigt. In diesem Schritt wird geprüft, ob die Gesamtabweichung einen vorgegebenen Grenzwert unterschreitet. Sollte dies der Fall sein, wird entschieden, dass der Ist-Datensatz einem gewünschten Abisolierergebnis entspricht (Schritt S15). Andernfalls wird entschieden, dass der Ist-Datensatz einem nicht gewünschten Abisolierergebnis entspricht (Schritt S16).

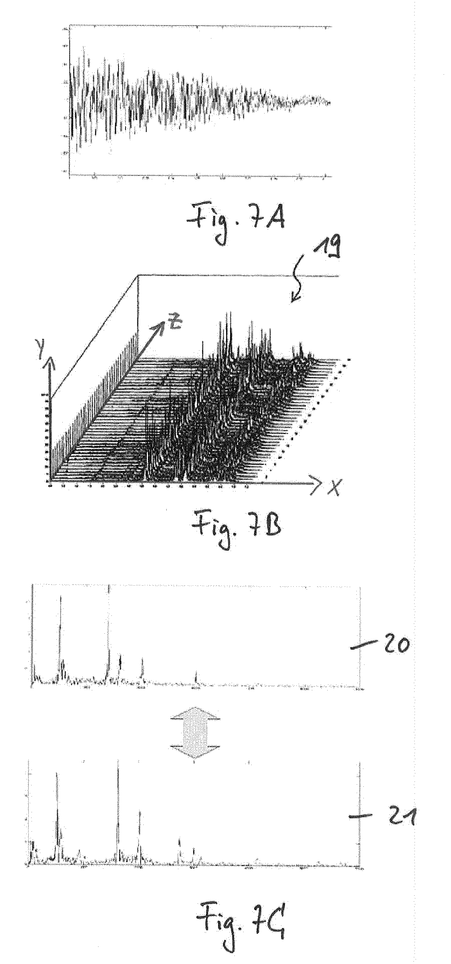

In der Figur 7A ist ein Beispiel für ein Messergebnis gegeben. Auf der Abszissenachse ist die Zeit eingetragen und auf der Ordinatenachse der Abtastwert. Diese Darstellung in der Zeitdomäne wird in den Frequenzbereich überführt. Dadurch entsteht ein gemessenes Frequenzspektrum 19, wie es beispielsweise in Figur 7B illustriert ist. Auf der x-Achse ist dabei die Frequenz, auf der y-Achse die Intensität und auf der z-Achse die Zeit aufgetragen. Die Pegel in den einzelnen Frequenzbereichen ändern sich also über die Zeit.

Die Figur 7C illustriert wie Zeitscheiben aus dem Frequenzspektrum aus Figur 7B ausgeschnitten werden. Auf der Abszissenachse ist die Frequenz aufgetragen und auf der Ordinatenachse die Intensität. Oben ist eine Zeitscheibe 20 des Ist-Datensatzes und unten eine Zeitscheibe 21 des Soll-Datensatzes dargestellt. Die beiden Zeitscheiben werden wie mit Bezug auf Figur 6 beschrieben miteinander verglichen, um eine Zeitscheibenabweichung zu ermitteln.

Die mit Bezug auf die Figuren gemachten Erläuterungen sind rein illustrativ und nicht beschränkend zu verstehen. An den gezeigten Ausführungsformen können viele Änderungen vorgenommen werden, ohne den Schutzbereich der Erfindung, wie er in den beigefügten Patentansprüchen festgelegt ist, zu verlassen.

BEZUGSZEICHENLISTE

| | |
|---|---|
| 1 | Kabel |
| 2 | Litzen |
| 3 | Isolation |
| 4 | Messer |
| 5 | Abisoliereinrichtung |
| 6 | erste Ausführungsform einer erfindungsgemäßen Vorrichtung |
| 7 | Messerblock |
| 8 | Spindel |
| 9 | Elektromotor |
| 10 | Schneidkante |
| 11 | Körperschallsensor |
| 12 | Computer |
| 13 | Verarbeitungseinheit |
| 14 | Steuereinrichtung |
| 15 | Speichereinheit |
| 16 | Verbindung |
| 17 | zweite Ausführungsform einer erfindungsgemäßen Vorrichtung |
| 18 | Mikrofon |
| 19 | gemessenes Frequenzspektrum |
| 20 | Zeitscheibe des Ist-Datensatzes |
| 21 | Zeitscheibe des Soll-Datensatzes M Ausführungsform eines erfindungsgemäßen Verfahrens |
| S1 | Messen von Schall |
| S2 | Analog-Digital-Wandlung |
| S3 | schnelle Fourier-Transformation |
| S4 | Filterung |
| S5 | t:=Anfangswert$_t$; Gesamtabweichung:=0 |
| S6 | f:=Anfangswert$_f$; Zeitscheibenabweichung$_t$:=0 |
| S7 | Abweichung$_{tf}$ := $|P_{Ist}(t,f) - P_{Soll}(t,f)|$ |
| S8 | Zeitscheibenabweichung$_t$ := Zeitscheibenabweichung$_t$ + Abweichung$_{tf}$ |
| S9 | f := f + vorgegebener Frequenzabstand |
| S10 | f = Endwert$_f$? |

S11    Gesamtabweichung = Gesamtabweichung + Zeitscheibenabweichungt
S12    t := t + vorgegebener Zeitabstand
S13    t = Endwert$_t$?
S14    Gesamtabweichung < Grenzwert?
S15    gewünschtes Abisolierergebnis
S16    nicht gewünschtes Abisolierergebnis

**Patentansprüche**

1.  Verfahren (M) zum Überwachen und/oder Steuern einer Abisoliereinrichtung (5) für ein Kabel (1), die ein abzuisolierendes Kabel (1) mit mindestens einer Litze (2) aus Metall und einer Isolation (3) aus Kunststoff abisoliert, indem sie mit mindestens einem Messer (4) in das Kabel einschneidet, um die Isolation (3) zumindest teilweise zu durchtrennen, und anschließend einen Teil der Isolation (3) von der mindestens einen Litze (2) durch relatives Bewegen des mindestens einen Messers (4) zum Kabel (1) abzieht, wobei das Verfahren die folgenden Schritte aufweist:

    - Messen von Schall (S1), der während des Einschneidens und/oder Abziehens entsteht,
    - Analysieren des Schalls (S2-S4), um einen Ist-Datensatz (19) zu ermitteln,
    - Vergleichen (S5-S13) des Ist-Datensatzes (19) mit mindestens einem Soll-Datensatz, um mindestens ein Vergleichsergebnis zu ermitteln, und
    - Entscheiden (S14-S16), ob ein gewünschtes oder nicht gewünschtes Abisolierergebnis vorliegt, basierend auf dem mindestens einen Vergleichsergebnis.

2.  Verfahren (M) nach dem vorhergehenden Anspruch, wobei es sich beim Schall um Körperschall und/oder Luftschall handelt.

3.  Verfahren (M) nach einem der vorhergehenden Ansprüche, wobei der Ist-Datensatz (19) einem gemessenen Frequenzspektrum und der mindestens eine Soll-Datensatz mindestens einem Vergleichsfrequenzspektrum entspricht.

4.  Verfahren (M) nach einem der vorhergehenden Ansprüche, wobei der Schritt des Analysierens des Schalls eine Analog-Digital-Wandlung (S2) und eine schnelle Fourier-Transformation (S3) zum Ermitteln eines gemessenen Frequenzspektrums umfasst.

5.  Verfahren (M) nach einem der vorhergehenden Ansprüche, wobei der Schritt des Analysierens des Schalls eine Filterung (S4) umfasst.

6.  Verfahren (M) nach einem der vorhergehenden Ansprüche, wobei der mindestens eine Soll-Datensatz einem gewünschten Abisolierergebnis entspricht.

7.  Verfahren (M) nach einem der vorhergehenden Ansprüche, wobei der mindestens eine Soll-Datensatz gewonnen wurde durch

    - Messen von Schall, der während des Einschneidens und/oder Abziehens entsteht,
    - Analysieren des Schalls, um einen Datensatz zu ermitteln,
    - Beurteilen des Abisolierergebnisses und
    - Abspeichern des Datensatzes als Soll-Datensatz, wenn das Abisolierergebnis einem gewünschten Abisolierergebnis entspricht.

8.  Verfahren (M) nach einem der vorhergehenden Ansprüche, wobei das Vergleichen des Ist-Datensatzes mit einem Soll-Datensatz die Schritte umfasst

    - Ermitteln (S5-S10, S12-S13) jeweils einer Zeitscheibenabweichung zwischen einer Zeitscheibe des Ist-Datensatzes (20) und einer Zeitscheibe des Soll-Datensatzes (21) zu mehreren vorgegebenen Zeitpunkten und
    - Aggregieren (S11), insbesondere Aufsummieren, der ermittelten Zeitscheibenabweichungen, um eine Gesamtabweichung zu ermitteln.

9.  Verfahren (M) nach dem vorhergehenden Anspruch, wobei der Ist-Datensatz einem gemessenen Frequenzspektrum und der Soll-Datensatz einem Vergleichsfrequenzspektrum entspricht und das Ermitteln einer Zeitscheibenabweichung zu einem vorgegebenen Zeitpunkt die Schritte umfasst

- Ermitteln (S6-S7, S9-S10) jeweils einer Abweichung zwischen einem Pegel der Zeitscheibe des gemessenen Frequenzspektrums zum vorgegebenen Zeitpunkt und einem Pegel der Zeitscheibe des Vergleichsfrequenzspektrums zum vorgegebenen Zeitpunkt für mehrere vorgegebene Frequenzen und
- Aggregieren (S8), insbesondere Aufsummieren, der ermittelten Abweichungen, um eine Zeitscheibenabweichung zum vorgegebenen Zeitpunkt zu ermitteln.

10. Verfahren (M) nach Anspruch 8 oder 9, wobei der Schritt des Entscheidens (S14-S16), ob ein gewünschtes oder nicht gewünschtes Abisolierergebnis vorliegt, die Schritte umfasst

- Entscheiden (S14, S15), dass der Ist-Datensatz einem gewünschten Abisolierergebnis entspricht, wenn die Gesamtabweichung einen vorgegebenen Grenzwert unterschreitet, und
- Entscheiden (S14, S16), dass der Ist-Datensatz einem nicht gewünschten Abisolierergebnis entspricht, wenn die Gesamtabweichung einen vorgegebenen Grenzwert überschreitet.

11. Verfahren (M) nach einem der vorhergehenden Ansprüche, mit dem weiteren Schritt Steuern der Abisoliereinrichtung (5) in Abhängigkeit von dem mindestens einen Vergleichsergebnis, um eine Einschneidtiefe des mindestens einen Messers (4) in das Kabel (1) anzupassen, wobei die Einschneidtiefe noch während eines überwachten Abisoliervorgangs angepasst wird und/oder die Einschneidtiefe für Abisoliervorgänge angepasst wird, die auf den überwachten Abisoliervorgang folgen.

12. Vorrichtung (6, 17) zum Überwachen und/oder Steuern einer Abisoliereinrichtung (5) für ein Kabel (1), das mindestens eine Litze (2) aus Metall und eine Isolation (3) aus Kunststoff aufweist, wobei die Abisoliereinrichtung (5) mindestens ein Messer (4) umfasst, um in das Kabel (1) einzuschneiden und die Isolation (3) zumindest teilweise zu durchtrennen, und dafür eingerichtet ist, nach dem Einschneiden einen Teil der Isolation (3) von der mindestens einen Litze (2) durch relatives Bewegen des mindestens einen Messers (4) zum Kabel (1) abzuziehen, die Vorrichtung aufweisend

- eine Sensorik (11, 18) zum Messen von Schall, der während des Einschneidens und/oder Abziehens entsteht, und
- eine Verarbeitungseinheit (13), die dafür eingerichtet ist,
- den gemessenen Schall zu analysieren, um einen Ist-Datensatz (19) zu ermitteln,
- den Ist-Datensatz mit mindestens einem Soll-Datensatz zu vergleichen, um mindestens ein Vergleichsergebnis zu ermitteln, und
- basierend auf dem mindestens einen Vergleichsergebnis zu entscheiden, ob ein gewünschtes oder nicht gewünschtes Abisolierergebnis vorliegt.

13. Vorrichtung (17) nach Anspruch 12, wobei die Sensorik ein Mikrofon (18) umfasst, das insbesondere in einem Bereich der Abisoliereinrichtung (5) angeordnet ist, in dem das mindestens eine Messer (4) in das Kabel (1) einschneidet.

14. Vorrichtung (6) nach Anspruch 12 oder 13, wobei die Sensorik einen Körperschallsensor (11) umfasst, der insbesondere in einem Bereich der Abisoliereinrichtung (5) angeordnet ist, in dem sich das mindestens eine Messer (4) befindet.

15. Vorrichtung (6, 17) nach einem der Ansprüche 12 bis 14, wobei die Verarbeitungseinheit (13) dafür eingerichtet ist, eine oder mehrere der folgenden Funktionen auszuführen:

- Analog-Digital-Wandlung,
- Schnelle Fourier-Transformation und
- Filterung.

16. Vorrichtung (6, 17) nach einem der Ansprüche 12 bis 15, mit einer Speichereinheit (15) zum Speichern mindestens eines Soll-Datensatzes, der einem gewünschten Abisolierergebnis entspricht.

17. Vorrichtung (6, 17) nach einem der Ansprüche 12 bis 16, mit einer Steuereinrichtung (14) zum Steuern der Abisoliereinrichtung (5) in Abhängigkeit von dem mindestens einen Vergleichsergebnis, um eine Einschneidtiefe des mindestens einen Messers (4) in das Kabel (1) anzupassen.

18. Abisoliereinrichtung (5) für ein Kabel (1) mit einer Vorrichtung (6, 17) nach zumindest einem der Ansprüche 12 bis 17.

Fig.1

Fig.2

Fig. 3A

Fig. 3B

Fig. 3C

Fig. 4

Fig. 5

Fig. 6

Fig. 7A

Fig. 7B

Fig. 7C

**Europäisches Patentamt**

**European Patent Office**

**Office européen des brevets**

# EUROPÄISCHER RECHERCHENBERICHT

Nummer der Anmeldung

EP 15 18 8319

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 5 421453 B2 (SHIN MEIWA IND CO LTD) 19. Februar 2014 (2014-02-19) * Absätze [0046] - [0240]; Abbildungen 1-37 *<br>----- | 1-18 | INV. H02G1/12 |
| X | EP 2 372 854 A1 (KM DIGITECH CO LTD [KR]) 5. Oktober 2011 (2011-10-05) * Absätze [0027] - [0045]; Abbildungen 3-6 *<br>----- | 1,2,6-8, 11-18 | |
| X | US 2010/077899 A1 (YANO TETSUYA [JP] ET AL) 1. April 2010 (2010-04-01) * das ganze Dokument *<br>----- | 1,2,6-8, 11-18 | |
| A | DE 40 36 443 A1 (SIEMENS AG [DE]) 21. Mai 1992 (1992-05-21) * das ganze Dokument *<br>----- | 1-18 | |

RECHERCHIERTE SACHGEBIETE (IPC)

H02G
G01H

Der vorliegende Recherchenbericht wurde für alle Patentansprüche erstellt

| Recherchenort | Abschlußdatum der Recherche | Prüfer |
|---|---|---|
| Den Haag | 23. März 2016 | Hermann, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 18 8319

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2016

| Im Recherchenbericht angeführtes Patentdokument | Datum der Veröffentlichung | Mitglied(er) der Patentfamilie | Datum der Veröffentlichung |
|---|---|---|---|
| JP 5421453 B2 | 19-02-2014 | KEINE | |
| EP 2372854 A1 | 05-10-2011 | KEINE | |
| US 2010077899 A1 | 01-04-2010 | JP 5274963 B2<br>JP 2010081770 A<br>US 2010077899 A1 | 28-08-2013<br>08-04-2010<br>01-04-2010 |
| DE 4036443 A1 | 21-05-1992 | CH 682864 A5<br>DE 4036443 A1 | 30-11-1993<br>21-05-1992 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2722949 A1